# FASCICULE DE BREVET EUROPEEN

(11) **EP 2 322 064 B1**
(45) Date de publication et mention de la délivrance du brevet: **01.05.2013**
(21) Numéro de dépôt: 10186663.0
(22) Date de dépôt: 06.10.2010
(51) Int. Cl.: A47J 37/06

(54) **Gaufrier non-réversible destiné à une cuisson homogène d'une pâte à gaufres**
Nicht-reversibles Waffeleisen zum homogenen Backen von Waffelteig
Non-reversible waffle maker intended for uniform cooking of waffle batter

(30) Priorité: 09.10.2009 FR 0957058
(43) Date de publication de la demande: 18.05.2011
(73) Titulaire: Lagrange, 69390 Vourles (FR)
(72) Inventeur: Gidoin, Hervé, 69004, Lyon (FR); Lagrange, Charles, 69004, LYON (FR)
(74) Mandataire: Maureau, Philippe

(56) Documents cités:
- FR-A- 935 371

## Description

La présente invention se rapporte à un gaufrier non-réversible destiné à une cuisson homogène d'une pâte à gaufres.

Un gaufrier comporte classiquement deux plaques de cuisson, chaque plaque présentant une empreinte comprenant des rainures croisées délimitant des plots. Les empreintes sont destinées à recevoir une pâte à gaufres.

Un tel gaufrier est connu de l'état de la technique, notamment du document FR 935.371. Ce gaufrier se compose de deux parties identiques, dont l'une est fixe et l'autre mobile (colonne 2, lignes 41 à 43). Chacune des parties comporte une plaque de cuisson pourvue d'empreintes habituelles (colonne 1, ligne 7).

Les deux plaques de cuisson sont, en position de fermeture, en appui l'une contre l'autre, avec ménagement d'un espace entre les empreintes des deux plaques.

Lors de la confection de gaufres, un utilisateur introduit préalablement la pâte dans l'empreinte inférieure d'une première plaque de cuisson. La cuisson de la pâte conduit à son expansion dans l'espace entre les empreintes des plaques de cuisson, en particulier dans les rainures de l'empreinte de la seconde plaque de cuisson. Or, il est bien connu que cette expansion de la pâte n'est pas uniforme et est accompagné généralement de l'apparition de bulles d'air emprisonnées dans la pâte. Il en résulte un remplissage imparfait de la pâte dans les rainures de l'empreinte de la seconde plaque de cuisson.

A cet égard, il est connu de l'état de la technique d'utiliser un gaufrier réversible, permettant de retourner les plaques de cuisson durant la cuisson de la pâte, afin de remplir de pâte les rainures des empreintes de la seconde plaque de cuisson par gravité. L'utilisation d'un tel gaufrier contraint l'utilisateur à surveiller le temps de cuisson de la pâte afin de retourner les plaques de cuisson sensiblement après 15 à 20 secondes, complexifiant par là-même la confection de gaufres. En outre, le gaufrier doit être conformé pour pouvoir être retourné, ce qui rend sa structure plus complexe.

La présente invention a pour objet de remédier aux inconvénients précités et consiste à cet effet en un gaufrier comportant :
- au moins une plaque de cuisson inférieure destinée à occuper, en condition d'utilisation, une position sensiblement horizontale, et présentant une empreinte qui, tournée vers le haut et comprenant des rainures croisées délimitant des plots, est destinée à recevoir une pâte à gaufres,
- au moins une plaque de cuisson supérieure, destinée à occuper, en condition d'utilisation, une position sensiblement horizontale, et présentant une empreinte tournée vers le bas,

les deux plaques de cuisson étant, en position de fermeture, en appui l'une contre l'autre suivant un plan de joint horizontal, avec ménagement d'un espace entre les empreintes des deux plaques de cuisson,

ledit gaufrier étant caractérisé en ce que la profondeur de l'empreinte de la plaque de cuisson supérieure relativement au plan de joint est comprise entre 10 et 40 % de la profondeur des rainures de l'empreinte de la plaque de cuisson inférieure relativement au plan de joint.

Ainsi, durant son expansion, la pâte a une distance limitée à parcourir, depuis les rainures de l'empreinte de la plaque de cuisson inférieure jusqu'à l'empreinte de la plaque de cuisson supérieure. Cette distance limitée associée à un volume d'expansion de la pâte également limité, conduit à un bon remplissage de la pâte dans l'empreinte de la plaque de cuisson supérieure.

Ce volume d'expansion de la pâte limité contribue également à limiter le risque de formation de bulles d'air dans la pâte, et contribue ainsi à l'obtention de motifs réguliers sur la face de la gaufre marquée de l'empreinte de la plaque de cuisson inférieure.

Selon une forme d'exécution, l'empreinte de la plaque de cuisson supérieure présente un fond sensiblement plan.

Ainsi, un tel gaufrier permet d'obtenir des gaufres dont la face marquée de l'empreinte de la plaque de cuisson supérieure est plane, facilitant alors considérablement l'étalement d'un produit alimentaire tel qu'une confiture ou une pâte chocolatée.

Selon une variante d'exécution, l'empreinte de la plaque de cuisson supérieure comprend des rainures croisées délimitant des plots, et disposées en vis-à-vis des rainures de l'empreinte de la plaque de cuisson inférieure, lorsque les plaques de cuisson sont en position de fermeture.

Ainsi, un tel gaufrier permet d'obtenir des gaufres comportant également des motifs réguliers, mais peu profonds, sur la face marquée de l'empreinte de la plaque de cuisson supérieure.

Dans un mode de réalisation, l'empreinte de la plaque de cuisson supérieure et les plots de l'empreinte de la plaque de cuisson inférieure présentent respectivement au moins une face dite supérieure et des faces dites inférieures, la ou les faces supérieures et les faces inférieures étant disposées en regard les unes des autres et à distance du plan de joint en condition d'utilisation.

Préférentiellement, la ou les faces supérieures de l'empreinte de la plaque de cuisson supérieure et les faces inférieures des plots de l'empreinte de la plaque de cuisson inférieure sont disposées à la même distance du plan de joint en condition d'utilisation.

Dans un mode de réalisation, chaque plaque de cuisson est équipée d'au moins une résistance électrique chauffante.

Une résistance électrique permet de chauffer efficacement une plaque de cuisson à un coût réduit, et est intégrable facilement dans le gaufrier.

Selon une caractéristique, les plaques de cuisson supérieure et inférieure sont montées respectivement sur des bâtis supérieur et inférieur.

Avantageusement, le bâti inférieur comporte des moyens d'appui sur un support, tels que des pieds.

Selon une caractéristique avantageuse, le bâti supérieur est équipé de moyens de commande du chauffage des plaques de cuisson.

Suivant une autre caractéristique de l'invention, les plaques de cuisson supérieure et inférieure délimitent, en position de fermeture, un canal périphérique destiné à l'évacuation d'un surplus de pâte à gaufres en expansion.

L'invention sera bien comprise à l'aide de la description qui suit, en référence au dessin schématique annexé représentant à titre d'exemples non limitatifs, deux formes d'exécution de ce gaufrier.
La figure 1 est une vue en perspective d'un premier gaufrier.
La figure 2 est une vue en coupe transversale du premier gaufrier.
La figure 3 est une vue en coupe transversale similaire à la figure 2 d'une seconde forme d'exécution de ce gaufrier.

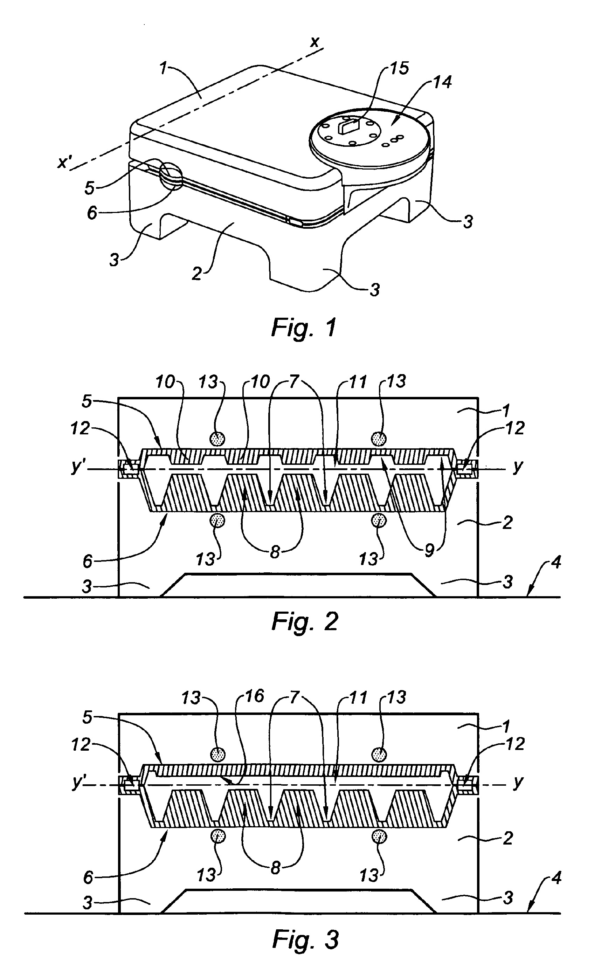

Le premier gaufrier illustré aux figures 1 et 2 comporte un bâti supérieur 1 monté pivotant sur un bâti inférieur 2 autour d'un axe X'-X sensiblement horizontal. Le bâti inférieur 2 comporte quatre pieds 3 formant des moyens d'appui sur un support 4.

Les bâtis supérieur et inférieur 1, 2 sont équipés respectivement d'une plaque de cuisson supérieure 5 et d'une plaque de cuisson inférieure 6. En position de fermeture représentée au dessin, les plaques de cuisson 5, 6 occupent une position horizontale.

La plaque de cuisson inférieure 6 présente une empreinte qui, tournée vers le haut et comprenant des rainures 7 délimitant des plots 8, est destinée à recevoir une pâte à gaufres, non représentée. Les rainures 7 et les plots 8 de l'empreinte de la plaque de cuisson inférieure 6 sont de section trapézoïdale.

La plaque de cuisson supérieure 5 présente une empreinte tournée vers le bas comprenant des rainures 9 délimitant des plots 10. Les rainures 9 et les plots 10 de l'empreinte de la plaque de cuisson supérieure 5 sont de section trapézoïdale.

Les plaques de cuisson 5, 6 sont représentées en position de fermeture, dans laquelle elles sont en appui l'une contre l'autre suivant un plan de joint Y'-Y horizontal, avec ménagement d'un espace 11 entre les deux empreintes des deux plaques de cuisson 5, 6.

Les rainures 9 de l'empreinte de la plaque de cuisson supérieure 5 sont disposées en vis-à-vis des rainures 7 de l'empreinte de la plaque de cuisson inférieure 6. La profondeur des rainures 9 de l'empreinte de la plaque de cuisson supérieure 5 relativement au plan de joint Y'-Y est inférieure à la profondeur des rainures 7 de l'empreinte de la plaque de cuisson inférieure 6 relativement au plan de joint Y'-Y. A cet égard, la profondeur des rainures 9 de l'empreinte de la plaque de cuisson supérieure 5 relativement au plan de joint Y'-Y est comprise entre 10 et 40% de la profondeur des rainures 7 de l'empreinte de la plaque de cuisson inférieure 6 relativement au plan de joint Y'-Y. A titre d'exemple non limitatif, à la figure 2, la profondeur des rainures 9 de l'empreinte de la plaque de cuisson supérieure 5 relativement au plan de joint Y'-Y est sensiblement égale à 40% de la profondeur des rainures 7 de l'empreinte de la plaque de cuisson inférieure 6 relativement au plan de joint Y'-Y.

Ainsi, le volume d'expansion de la pâte dans les rainures 9 de l'empreinte de la plaque de cuisson supérieure 5 est limité. Il en résulte un bon remplissage de la pâte dans l'empreinte de la plaque de cuisson supérieure 5. De plus, ce volume d'expansion limité de la pâte contribue à limiter le risque de formation de bulles d'air dans la pâte, et ainsi permet l'obtention de motifs réguliers sur les faces de la gaufre marquées respectivement des empreintes des plaques de cuisson supérieure et inférieure 5, 6.

En outre, dans cette position de fermeture, les plaques de cuisson 5, 6 délimitent un canal périphérique 12 destiné à l'évacuation d'un surplus de pâte à gaufres en expansion, non représenté.

Par ailleurs, le bâti supérieur 1 (respectivement le bâti inférieur 2) est équipé de deux résistances 13 électriques conçues pour chauffer la plaque de cuisson supérieure 5 (respectivement la plaque de cuisson inférieure 6).

Ces résistances 13 sont commandées par un thermostat 14, muni d'un bouton 15 de réglage de la température de cuisson. Le thermostat 14 est monté sur le bâti supérieur 1.

Lorsqu'un utilisateur souhaite confectionner des gaufres à partir de ce premier gaufrier, l'utilisateur sélectionne préalablement avec le thermostat 14 la température de cuisson à l'aide du bouton 15.

Puis l'utilisateur ouvre le gaufrier en faisant pivoter le bâti supérieur 1 sur le bâti inférieur 2 afin d'introduire une pâte à gaufres dans l'empreinte de la plaque de cuisson inférieure 6.

Lorsque la pâte est introduite, l'utilisateur ferme le gaufrier en faisant pivoter le bâti supérieur 1 sur le bâti inférieur 2 de sorte que les plaques de cuisson 5, 6 sont en position de fermeture.

Lorsque la température de cuisson sélectionnée est atteinte (correspondant à un temps de cuisson), le thermostat 14 coupe l'alimentation des résistances chauffantes 13.

L'utilisateur peut alors ouvrir le gaufrier afin de retirer la gaufre confectionnée.

La figure 3 représente une variante d'exécution du gaufrier des figures 1 et 2, dans lequel les mêmes éléments sont désignés par les mêmes références que précédemment.

Le gaufrier diffère du premier gaufrier en ce que la plaque de cuisson supérieure 5 présente une empreinte tournée vers le bas comprenant un fond 16 plan. Ainsi, ce gaufrier permet d'obtenir des gaufres dont la face marquée de l'empreinte de la plaque de cuisson supérieure 5 est plane, facilitant alors considérablement l'étalement d'un produit alimentaire tel qu'une confiture ou une pâte chocolatée.

La confection de gaufres à partir de ce gaufrier est similaire à celle du premier gaufrier.

Bien entendu, les formes d'exécution de l'invention décrites ci-dessus ne présentent aucun caractère limitatif. Des détails et améliorations peuvent y être apportés dans d'autres variantes d'exécution sans pour autant sortir du cadre de l'invention comme définie dans les revendications.

## Revendications

1. Gaufrier comportant :
- au moins une plaque de cuisson inférieure (6) destinée à occuper, en condition d'utilisation, une position sensiblement horizontale, et présentant une empreinte qui, tournée vers le haut et comprenant des rainures (7) croisées délimitant des plots (8), est destinée à recevoir une pâte à gaufres,
- au moins une plaque de cuisson supérieure (5), destinée à occuper, en condition d'utilisation, une position sensiblement horizontale, et présentant une empreinte tournée vers le bas,
les deux plaques de cuisson (5, 6) étant, en position de fermeture, en appui l'une contre l'autre suivant un plan de joint (Y'-Y) horizontal, avec ménagement d'un espace (11) entre les empreintes des deux plaques de cuisson (5, 6),
ledit gaufrier étant **caractérisé en ce que** la profondeur de l'empreinte de la plaque de cuisson supérieure (5) relativement au plan de joint (Y'-Y) est comprise entre 10 et 40 % de la profondeur des rainures (7) de l'empreinte de la plaque de cuisson inférieure (6) relativement au plan de joint (Y'-Y).

2. Gaufrier selon la revendication 1, **caractérisé en ce que** l'empreinte de la plaque de cuisson supérieure (6) présente un fond (16) sensiblement plan.

3. Gaufrier selon la revendication 1, **caractérisé en ce que** l'empreinte de la plaque de cuisson supérieure (5) comprend des rainures (9) croisées délimitant des plots (10), et disposées en vis-à-vis des rainures (7) de l'empreinte de la plaque de cuisson inférieure (6), lorsque les plaques de cuisson (5, 6) sont en position de fermeture.

4. Gaufrier selon l'une des revendications 1 à 3, **caractérisé en ce que** l'empreinte de la plaque de cuisson supérieure (5) et les plots (8) de l'empreinte de la plaque de cuisson inférieure (6) présentent respectivement au moins une face dite supérieure et des faces dites inférieures, la ou les faces supérieures et les faces inférieures étant disposées en regard les unes des autres et à distance du plan de joint (Y'-Y) en condition d'utilisation.

5. Gaufrier selon la revendication 4, **caractérisé en ce que** la ou les faces supérieures de l'empreinte de la plaque de cuisson supérieure (5) et les faces inférieures des plots (8) de l'empreinte de la plaque de cuisson inférieure (6) sont disposées sensiblement à la même distance du plan de joint (Y'-Y) en condition d'utilisation.

6. Gaufrier selon l'une des revendications 1 à 5, **caractérisé en ce que** chaque plaque de cuisson (5, 6) est équipée d'au moins une résistance (13) électrique chauffante.

7. Gaufrier selon l'une des revendications 1 à 6, **caractérisé en ce que** les plaques de cuisson supérieure et inférieure (5, 6) sont montées respectivement sur des bâtis supérieur et inférieur (1, 2).

8. Gaufrier selon la revendication 7, **caractérisé en ce que** le bâti supérieur (1) est monté pivotant autour d'un axe (X'-X) horizontal sur le bâti inférieur (2).

9. Gaufrier selon la revendication 7 ou 8, **caractérisé en ce que** le bâti inférieur (2) comporte des moyens d'appui sur un support (4), tels que des pieds (3).

10. Gaufrier selon l'une des revendications 7 à 9, **caractérisé en ce que** le bâti supérieur (1) est équipé de moyens de commande (14, 15) du chauffage des plaques de cuisson (5, 6).

11. Gaufrier selon l'une des revendications 1 à 10, **caractérisé en ce que** les plaques de cuisson supérieure et inférieure (5, 6) délimitent, en position de fermeture, un canal (13) périphérique destiné à l'évacuation d'un surplus de pâte à gaufres en expansion.

## Claims

1. A waffle iron, including:
- at least one lower cooking plate (6) designed to occupy, under usage conditions, a substantially horizontal position, and having a cavity which, turned upward and comprising intersecting slots (7) defining studs (8), is designed to receive a waffle batter,
- at least one upper cooking plate (5), designed to occupy, under usage conditions, a substantially horizontal position, and having a cavity turned downward,
the two cooking plates (5, 6) being, in the closed position, bearing against one another along a horizontal joint plane (Y'-Y), with a space (11) formed between the cavities of the two cooking plates (5, 6),
said waffle iron being **characterized in that** the depth of the cavity of the upper cooking plate (5) relative to the joint plane (Y'-Y) is comprised between 10 and 40% of the depth of the slots (7) of the cavity of the lower cooking plate (6) relative to the joint plane (Y'-Y).

2. The waffle iron according to claim 1, **characterized in that** the cavity of the upper cooking plate (6) has a substantially planar bottom (16).

3. The waffle iron according to claim 1, **characterized in that** the cavity of the upper cooking plate (5) comprises intersecting slots (9) defining studs (10), and positioned across from the slots (7) of the cavity of the lower cooking plate (6), when the cooking plates (5, 6) are in the closed position.

4. The waffle iron according to one of claims 1 to 3, **characterized in that** the cavity of the upper cooking plate (5) and the studs (8) of the cavity of the lower cooking plate (6) respectively have at least one so-called upper face and so-called lower faces, the upper face(s) and the lower faces being positioned across from one another and at a distance from the joint plane (Y'-Y) under usage conditions.

5. The waffle iron according to claim 4, **characterized in that** the upper face(s) of the cavity of the upper cooking plate (5) and the lower faces of the studs (8) of the cavity of the lower cooking plate (6) are positioned substantially at the same distance from the joint plane (Y'-Y) under usage conditions.

6. The waffle iron according to one of claims 1 to 5, **characterized in that** each cooking plate (5, 6) is equipped with at least one heating electrical resistance (13).

7. The waffle iron according to one of claims 1 to 6, **characterized in that** the upper and lower cooking plates (5, 6) are respectively mounted on upper and lower housings (1, 2).

8. The waffle iron according to claim 7, **characterized in that** the upper housing (1) is mounted pivoting around a horizontal axis (X'-X) on said lower frame (2).

9. The waffle iron according to claim 7 or 8, **characterized in that** the lower housing (2) includes bearing means on the support (4), such as feet (3).

10. The waffle iron according to one of claims 7 to 9, **characterized in that** the upper frame (1) is equipped with control means (14, 15) for the heating of the cooking plates (5, 6).

11. The waffle iron according to one of claims 1 to 10, **characterized in that** the upper and lower cooking plates (5, 6) define, in the closed position, a peripheral channel (13) designed to discharge excess waffle batter during expansion.

## Patentansprüche

1. Waffeleisen, umfassend:
- mindestens eine untere Backfläche (6), die dazu bestimmt ist, unter Betriebsbedingungen eine etwa horizontale Stellung einzunehmen und eine Prägung aufweist, die, nach oben zeigend und gekreuzte Rillen (7) aufweisend, die Zapfen (8) begrenzen, dazu bestimmt ist, einen Waffelteig aufzunehmen,
- mindestens eine obere Backfläche (5), die dazu bestimmt ist, unter Betriebsbedingungen eine etwa horizontale Stellung einzunehmen und eine Prägung aufweist, die nach unten zeigt,
wobei sich die beiden Backflächen (5, 6) in geschlossener Stellung gemäß einer horizontalen Verbindungsebene (Y'-Y) bei Ausbildung eines Raums (11) zwischen den Prägungen der beiden Backflächen (5, 6) aufeinander abstützen,
wobei das Waffeleisen **dadurch gekennzeichnet ist, dass** die Tiefe der Prägung der relativ zur Verbindungsebene (Y'-Y) oberen Backfläche (5) zwischen 10 und 40 % inklusive der Tiefe der Rillen (7) der Prägung der relativ zur Verbindungsebene (Y'-Y) unteren Backfläche (6) ist.

2. Waffeleisen nach Anspruch 1, **dadurch gekennzeichnet, dass** die Prägung der oberen Backfläche (6) einen etwa ebenen Boden (16) aufweist.

3. Waffeleisen nach Anspruch 1, **dadurch gekennzeichnet, dass** die Prägung der oberen Backfläche (5) gekreuzte Rillen (9), die Zapfen (10) begrenzen, umfasst, die gegenüber Rillen (7) der Prägung der unteren Backfläche (6) angeordnet sind, wenn sich die Backflächen (5, 6) in geschlossener Stellung befinden.

4. Waffeleisen nach einem der Ansprüche 1 bis 3, **dadurch gekennzeichnet, dass** die Prägung der oberen Backfläche (5) und die Zapfen (8) der Prägung der unteren Backfläche (6) jeweils mindestens eine obere Seite und untere Seiten aufweisen, wobei die Oberseite(n) und die Unterseiten unter Betriebsbedingungen einander gegenüber und beabstandet von der Verbindungsebene (Y'-Y) angeordnet sind.

5. Waffeleisen nach Anspruch 4, **dadurch gekennzeichnet, dass** die Oberseite(n) der Prägung der oberen Backfläche (5) und die Unterseiten der Zapfen (8) der Prägung der unteren Backfläche (6) unter Betriebsbedingungen etwa im selben Abstand von der Verbindungsebene (Y'-Y) angeordnet sind.

6. Waffeleisen nach einem der Ansprüche 1 bis 5, **dadurch gekennzeichnet, dass** jede Backfläche (5, 6) mit mindestens einem elektrischen Heizwiderstand (13) ausgestattet ist.

7. Waffeleisen nach einem der Ansprüche 1 bis 6, **dadurch gekennzeichnet, dass** die obere und untere Backfläche (5, 6) jeweils auf einem oberen und unteren Gestell (1, 2) montiert ist.

8. Waffeleisen nach Anspruch 7, **dadurch gekennzeichnet, dass** das obere Gestell (1) auf dem unteren Gestell (2) um eine horizontale Achse (X'-X) schwenkbar befestigt ist.

9. Waffeleisen nach Anspruch 7 oder 8, **dadurch gekennzeichnet, dass** das untere Gestell (2) Stützmittel auf einer Unterlage (4) aufweist, wie beispielsweise Füße (3).

10. Waffeleisen nach einem der Ansprüche 7 bis 9, **dadurch gekennzeichnet, dass** das obere Gestell (1) mit Steuermitteln (14, 15) der Heizung der Backflächen (5, 6) ausgestattet ist.

11. Waffeleisen nach einem der Ansprüche 1 bis 10, **dadurch gekennzeichnet, dass** die obere und untere Backfläche (5, 6) in geschlossener Stellung einen peripheren Kanal (13) begrenzen, der zur Ableitung überschüssigen Waffelteigs in Ausdehnung bestimmt ist.
